# EUROPÄISCHE PATENTSCHRIFT

(11) **EP 2 744 621 B1**
(45) Veröffentlichungstag und Bekanntmachung des Hinweises auf die Patenterteilung: **01.06.2016**
(21) Anmeldenummer: 12790791.3
(22) Anmeldetag: 07.11.2012
(51) Int. Cl.: B23K 20/12

(54) **REIBAUFTRAGSVORRICHTUNG**
FRICTIONAL APPLICATION DEVICE
DISPOSITIF D'APPLICATION PAR FRICTION

(30) Priorität: 08.11.2011 DE 102011117961
(43) Veröffentlichungstag der Anmeldung: 25.06.2014
(73) Patentinhaber: Hochschule Für Angewandte Wissenschaften - Fachhochschule Kempten, 87435 Kempten (DE)
(72) Erfinder: SCHINDELE, Paul, 87439 Kempten (DE)
(74) Vertreter: Hoefer & Partner Patentanwälte mbB
(86) Internationale Anmeldenummer: PCT/EP2012/004637
(87) Internationale Veröffentlichungsnummer: WO 2013/068111

(56) Entgegenhaltungen:
- EP-A1- 1 952 931
- EP-A2- 1 361 014
- US-A1- 2006 138 197
- US-A1- 2007 241 163

## Beschreibung

Aus dem Stand der Technik ist es bekannt, mittels eines Auftragselements Werkstoff auf eine Oberfläche eines Werkstücks aufzubringen. Dies erfolgt durch eine Relativbewegung des Auftragselements relativ zu der Oberfläche des Werkstücks. Dabei wird entweder durch Vorerwärmung mittels externer Wärmequellen oder durch Reibungswärme der Kontaktbereich des Auftragselements plastifiziert, so dass ein Materialauftrag erfolgen kann. Ein Verfahren dieser Art beschreibt die DE 10 2008 044 763.

Sowohl bei zylindrischen oder stabförmigen Auftragselementen, welche um ihre Längsachse gedreht werden, als auch bei zylindrischen rollenartigen Auftragselementen, welche um eine senkrecht zur Kontaktebene angeordnete Achse drehbar sind, kommt es mit zunehmendem Werkstoffauftrag, insbesondere bei Auftragselementen aus metallischen Werkstoffen, zu einer Verformung mit Wulstbildung. Dieser Vorgang tritt sowohl bei einem Reibauftragsschweißen, als auch bei einer Reibbeschichtung auf.

Die Wulstbildung führt dazu, dass für den eigentlichen Auftragsvorgang oder Beschichtungsvorgang weniger Material zur Verfügung steht. Das Auftragselement verschleißt somit schneller und muss schneller ausgetauscht werden, da der gebildete Wulst nicht für den Auftragsvorgang oder Beschichtungsvorgang verwendbar ist. Dies führt zu höheren Kosten bei dem Auftrags- oder Beschichtungsvorgang. Ein weiterer Nachteil besteht darin, dass die Geometrie der durch das Auftragselement aufgebrachten Schicht (Auftragsraupe) nicht gleichmäßig ist, so dass der Auftragsvorgang (Auftragsbeschichten oder Auftragsreibschweißen) nicht optimal durchgeführt werden kann.

Aus der GB 1.053.148 A ist es bekannt, beim Reibschweißen ein Formelement zu verwenden, um die ausgebildete Schweißnaht zu formen. Eine Wulstbildung wird hierdurch nicht verhindert, es wird vielmehr die Schweißnaht geformt.

Aus der US 2007/241163 A1 ist ein Verfahren zum Punkt-Reibschweißen vorbekannt. Hierbei wird ein Schweißkopf mit einer mittigen Ausnehmung auf zwei übereinander liegende Werkstücke aufgesetzt. Durch die mittige Ausnehmung wird ein drehendes Werkzeug auf die Werkstücke aufgesetzt, um eine Punktschweißung durchzuführen. Der Schweißkopf presst dabei die Werkstücke gegeneinander. Nach erfolgter Fertigstellung der Punktschweißung wird das Werkzeug entfernt. Nachfolgend löst sich der Schweißkopf von den Werkstücken.

Aus der EP 1 952 931 A1 ist eine Mechtrode mit Pulverzufuhr zum Oberflächenauftrag vorbekannt. Die Mechtrode ist hohl ausgebildet, um in einer zentrischen Ausnehmung Pulver zuzuführen. Die Mechtrode wird unter Druck und Drehung über die Oberfläche eines Substrats bewegt.

Der Erfindung liegt die Aufgabe zugrunde, eine Reibauftragsvorrichtung zu schaffen, welche bei einfachem Aufbau und einfacher, kostengünstiger Herstellbarkeit die Nachteile des Standes der Technik vermeidet und einen präzisen Materialauftrag ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass mittels der erfindungsgemäßen Vorrichtung das Auftragselement, welches mittels einer Bewegungsvorrichtung auf einer Oberfläche eines Werkstücks bewegbar ist und welches zum Zwecke des Materialauftrags in eine Relativbewegung (Drehung, Rotation oder Ähnliches) bringbar ist, an seinem Kontaktbereich mit der Oberfläche des Werkstücks durch zumindest ein Stützwerkzeug abgestützt ist, welches eine Wulstbildung verhindert. Es wird erfindungsgemäß somit der Kontaktbereich oder freie Endbereich des Auftragselements seitlich abgestützt, so dass nur die stirnseitige Kontaktfläche (bei einem zylindrischen, um seine Längsachse drehbaren Auftragselement) oder die Umfangsfläche (bei einem scheibenförmigen Auftragselement) in Kontakt mit der Oberfläche des Werkstücks steht, während die angrenzenden Seiten des Auftragselements durch das zumindest eine Stützwerkzeug abgestützt werden. Es wird somit eine Wulstbildung verhindert, da das erweichte oder plastifizierte Auftragselement sich nicht in unerwünschter Weise seitlich verformen kann. Eine Wulstbildung kann damit nicht auftreten.

In besonders günstiger Weiterbildung der Erfindung ist vorgesehen, dass das Stützwerkzeug an der Oberfläche des Werkstücks angeordnet ist. Alternativ hierzu kann das zumindest eine Stützwerkzeug zusammen mit dem Auftragselement entlang der Oberfläche des Werkstücks bewegbar sein, so dass das Stützwerkzeug nicht an dem Werkstück, sondern separat an einem Bewegungselement des Auftragselements gelagert ist.

In besonders günstiger Ausgestaltung der Erfindung ist vorgesehen, dass das Stützwerkzeug leistenförmig, rollenförmig, kegelrollenförmig oder bandartig ausgebildet ist. Abhängig von der Geometrie des Stützwerkzeugs können zwei oder mehrere derartige Stützwerkzeuge vorgesehen sein. Diese können entweder an der Oberfläche des Auftragselements abwälzen, so wie dies bei rollenförmigen oder kegelförmigen Stützwerkzeugen der Fall ist, sie können sich auch in einer Gleitbewegung befinden, so wie dies bei leistenförmigen Stützwerkzeugen realisiert ist, oder sie können in Form von umlaufenden Bändern ausgebildet sein.

Besonders vorteilhaft ist es, wenn das Stützwerkzeug an einer Trägervorrichtung gelagert ist. Dabei kann es in Weiterbildung der Erfindung günstig sein, wenn das Stützwerkzeug mittels zumindest einer Antriebsvorrichtung versehen oder gekoppelt ist, um eine Relativbewegung zur Oberfläche des Auftragselements durchzuführen.

Bei der Verwendung mehrerer Stützwerkzeuge kann es besonders vorteilhaft sein, wenn diese lageveränderbar angeordnet sind. So ist es insbesondere vorteilhaft, wenn das Stützwerkzeug eine Relativbewegung zu der Oberfläche des Werkstücks ermöglicht, um bei der Aufbringung mehrerer Auftragsbahnen sicherzustellen, dass das jeweilige Stützwerkzeug gegen die Oberfläche des Werkstücks zur Anlage kommt und somit den vordersten Endbereich des Auftragselements abstützen kann.

In Weiterbildung der Erfindung ist es auch möglich, die Trägervorrichtung, an welcher das oder die Stützwerkzeug(e) angeordnet sind, mit einer Heizeinrichtung zu versehen, um das Auftragselement zusätzlich zu erwärmen. Dabei kann es auch günstig sein, wenn das Stützwerkzeug aus einem wärmeisolierenden oder schlecht wärmeleitenden Material gefertigt ist, um durch seinen Kontakt mit dem Auftragselement diesem keine Wärme zu entziehen. In alternativer Ausgestaltung der Erfindung ist es auch möglich, das Stützwerkzeug selbst mit einer Heizvorrichtung zur Erwärmung des Auftragselements zu versehen.

Die erfindungsgemäße Reibauftragsvorrichtung kann sowohl als Reibbeschichtungsvorrichtung oder als Reibschweißvorrichtung ausgestaltet sein.

Im Folgenden wird die Erfindung anhand von Ausführungsbeispielen in Verbindung mit der Zeichnung beschrieben. Dabei zeigt:
- Fig. 1: eine vereinfachte Schnittansicht eines Auftragselements 1 mit Wulstbildung;
- Fig. 2: eine Schnittansicht, analog Fig. 1, einer weiteren Ausführungsform eines Auftragselements mit Wulstbildung;
- Fig. 3: eine perspektivische Ansicht eines ersten Ausführungsbeispiels einer erfindungsgemäßen Reibauftragsvorrichtung mit Stützelementen in Leistenform;
- Fig. 4: eine perspektivische Teil-Unteransicht des Ausführungsbeispiels gemäß Fig. 3;
- Fig. 5, 6: Ansichten analog Fig. 3 und 4 eines weiteren Ausführungsbeispiels mit bandförmigen Stützwerkzeugen;
- Fig. 7, 8: Ansichten analog den Fig. 3 und 4 eines weiteren Ausführungsbeispiels mit rollenförmigen Stützwerkzeugen;
- Fig. 9, 10: Ansichten analog Fig. 3 und 4 eines weiteren Ausführungsbeispiels mit kegelförmigen Stützwerkzeugen; und
- Fig. 11: eine perspektivische Ansicht eines weiteren Ausführungsbeispiels einer erfindungsgemäßen Reibauftragsvorrichtung mit einem Auftragselement gemäß Fig. 2.

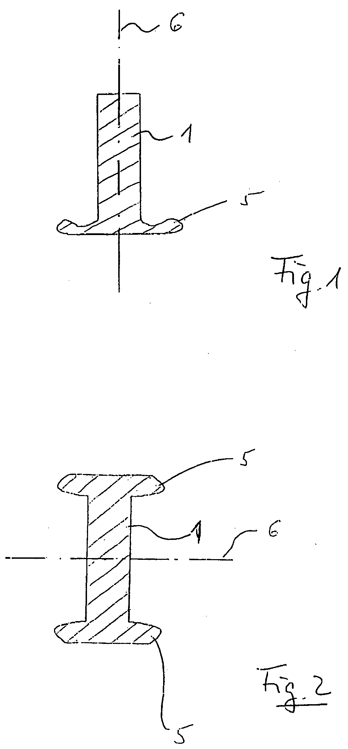

Die Fig. 1 zeigt eine vereinfachte Schnittansicht eines Auftragselements 1, welches stabförmig ausgebildet und um seine Drehachse 6 drehbar ist. Der freie Endbereich des Auftragselements 1 weist eine Wulst 5 auf, welche sich durch eine Verformung des Auftragselements 1 ergibt, wenn dieses mit einer Kraft längs der Drehachse 6 gegen eine nicht dargestellte Werkstückoberfläche gepresst wird, um einen Materialauftrag zu realisieren.

Die Fig. 2 zeigt in analoger Darstellung ein scheibenförmiges Auftragselement 1 mit einer Wulst 5 an der äußeren Umfangsfläche, welche bei einer Drehung um die Drehachse 6 auch in Kontakt mit einer Oberfläche eines Werkstücks steht.

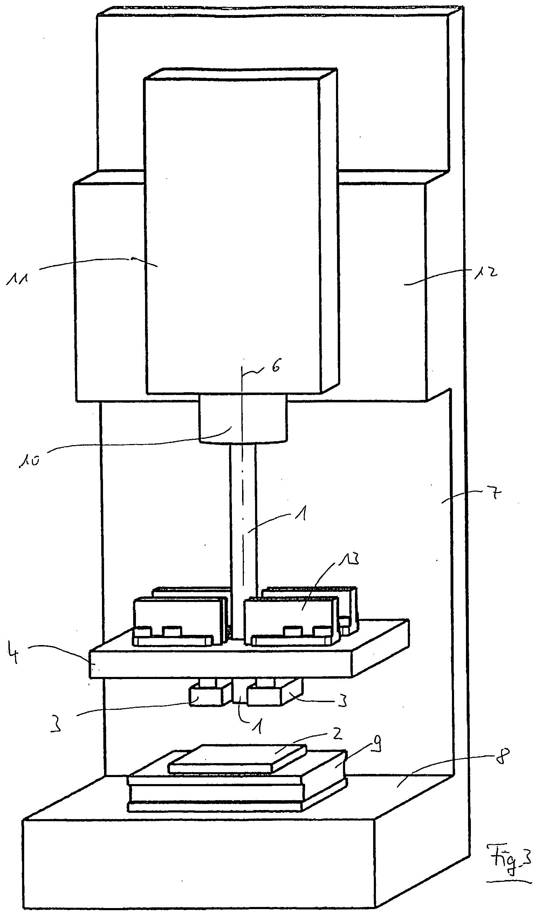

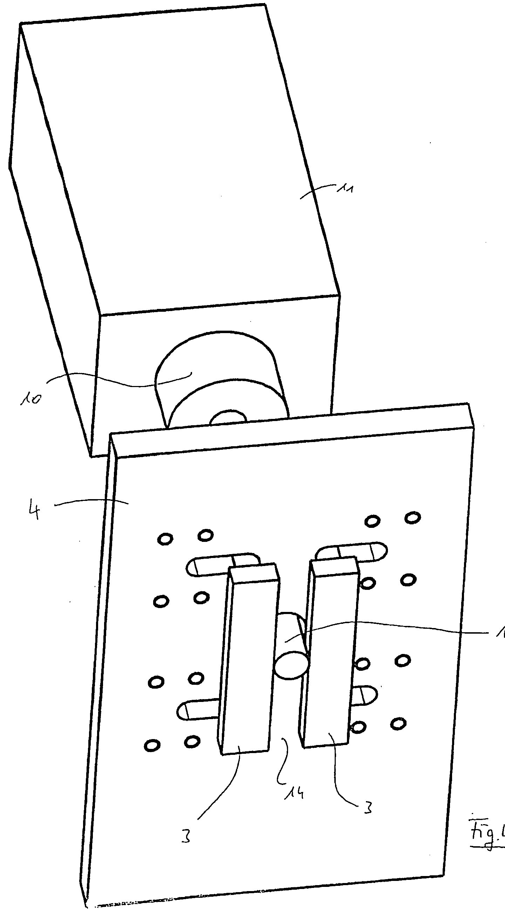

Die Fig. 3 und 4 zeigen jeweils in perspektivischer Ansicht ein Ausführungsbeispiel einer erfindungsgemäßen Reibauftragsvorrichtung. Diese umfasst ein Gestell 7 mit einem Tisch 8, auf welchem ein Halter 9 positioniert ist, auf welchem ein Werkstück 2 angeordnet ist. An dem Gestell 7 ist ein Support 12 ausgebildet, welcher nur schematisch dargestellt ist und über geeignete Bewegungsbahnen einen Schlitten 11 lagert. An dem Schlitten 11 (ebenfalls nur schematisch dargestellt) ist eine Drehspindel 10 angeordnet, an welcher ein stabförmiges Auftragselement 1 gelagert ist. Durch die Drehspindel 10 wird das Auftragselement 10 in Drehung versetzt, um durch einen Reibkontakt mit der Oberfläche des Werkstücks 2 Material aufzutragen. Durch geeignete Bewegung des Schlittens 11 und/oder des Supports 12 kann somit eine Materialbahn auf das Werkstück 2 aufgebracht werden. Die Drehspindel 10 und/oder der Schlitten 11 sind in vertikaler Richtung bewegbar, um das Auftragselement 1 nachzuführen, um auf diese Weise den Materialauftrag zu realisieren.

Die Fig. 3 und 4 zeigen weiterhin in schematischer Darstellung eine Trägervorrichtung 4, die ebenfalls relativ zu dem Werkstück 2 bewegbar ist. Bei dem gezeigten Ausführungsbeispiel ist die Trägervorrichtung 4 plattenförmig ausgebildet, sie trägt an ihrer Oberseite mehrere Heizelemente 13, welche ebenfalls nur schematisch dargestellt sind und beispielsweise durch Strahlungswärme das Auftragselement 1 erwärmen.

An der Unterseite der Trägervorrichtung 4 sind bei dem gezeigten Ausführungsbeispiel zwei leistenförmige Stützwerkzeuge 3 angeordnet, welche einen Spalt 14 bilden bzw. zueinander einen Abstand aufweisen, in welchem passgenau das Auftragselement 1 angeordnet ist. Die beiden leistenartigen Stützwerkzeuge liegen somit schienenartig gegen das Auftragselement 1 an, welches sich um seine Drehachse 6 dreht.

Erfindungsgemäß ist es möglich, die schienenartigen Stützwerkzeuge alternativ zu der gezeigten Ausführung auch an dem Werkstück 2 zu fixieren und somit nicht, wie in den Fig. 3 und 4 gezeigt, diese zusammen mit dem Auftragselement zu bewegen. Die schienenförmigen Stützwerkzeuge können einen rechteckigen Querschnitt aufweisen, es ist jedoch auch möglich, diese am Kontaktbereich zu dem Auftragselement 1 abzuschrägen, um der Wulstbildung effektiver entgegenzuwirken.

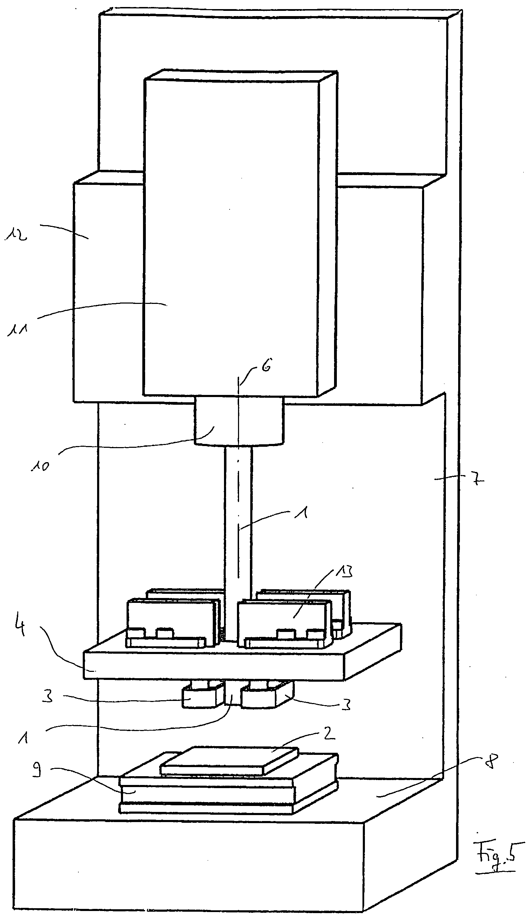

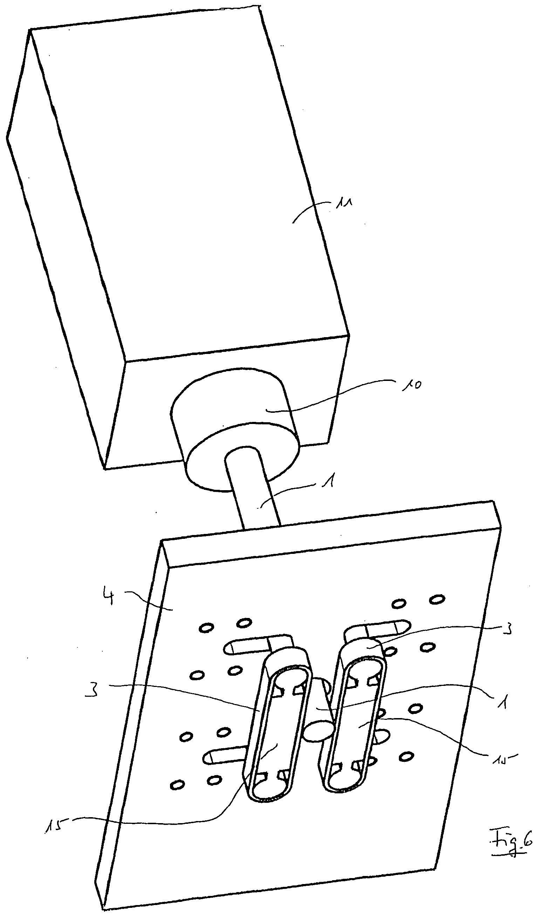

Die Fig. 5 und 6 zeigen ein weiteres Ausführungsbeispiel, wobei, wie bei den vorhergehenden und den nachfolgenden Figuren, gleiche Teile mit gleichen Bezugsziffern versehen sind.

Bei dem in den Fig. 5 und 6 gezeigten Ausführungsbeispiel sind die Stützwerkzeuge als umlaufende Begrenzungsbänder ausgebildet, welche mittels eines nicht dargestellten Antriebs um einen Stützkörper 15 geführt werden. Durch die Bewegung der bandartigen Stützwerkzeuge 3 tritt keine Relativbewegung zwischen den Stützwerkzeugen 3 und dem Auftragselement 1 auf, so dass die bandartigen Stützwerkzeuge 3 eine abwälzende Bewegung durchführen und somit eine Wulstbildung verhindern.

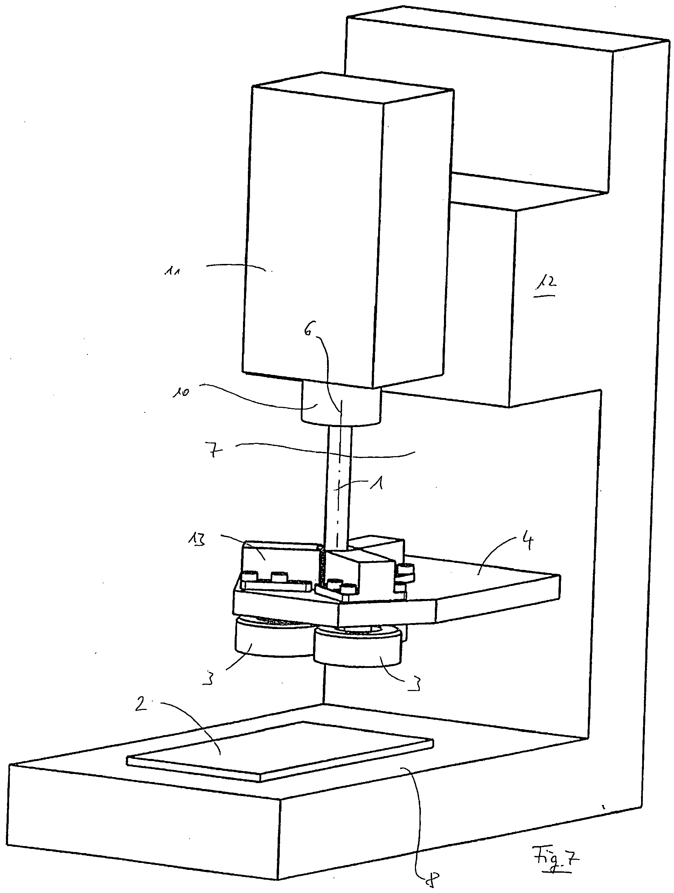

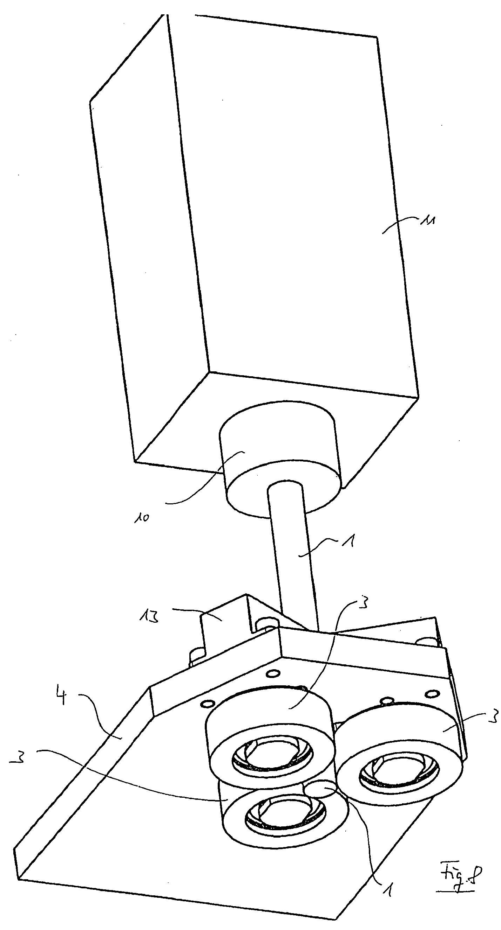

Bei dem Ausführungsbeispiel der Fig. 7 und 8 sind drei Stützwerkzeuge 3 vorgesehen, welche rollenartig ausgebildet sind. Die Stützwerkzeuge 3 umschließen den freien Endbereich des Auftragselements 1 und stützen diesen ab, damit keine Wulstbildung auftritt bzw., wie auch bei den vorstehend beschriebenen Ausführungsbeispielen, bei einer Wulstbildung sofort eine Rückformung des Auftragselements erfolgt.

Auch bei diesem Ausführungsbeispiel rollen die Stützwerkzeuge 3 auf der Oberfläche des Auftragselements 1 ab, ähnlich dem in den Fig. 5 und 6 beschriebenen Ausführungsbeispiel, so dass keine Relativbewegung auftritt und somit auch keine Spanbildung durch ein Abscheren von Material des Auftragselements erfolgen kann.

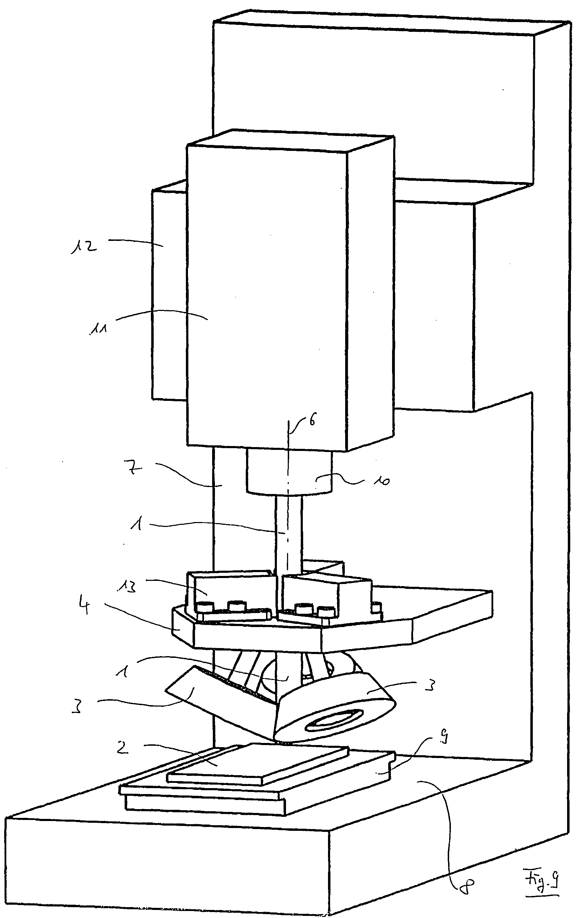

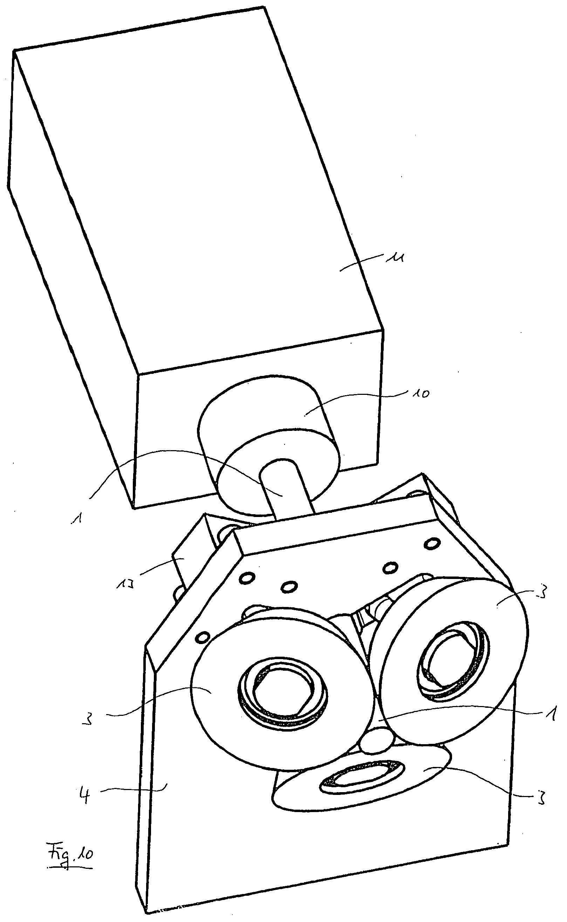

Die Fig. 9 und 10 zeigen ein weiteres Ausführungsbeispiel, bei welchem, analog dem Ausführungsbeispiel der Fig. 7 und 8, drei Stützwerkzeuge 3 vorgesehen sind, welche kegelförmig ausgebildet sind und in ihren Achsen eine Neigung zur Drehachse 6 des Auftragselements 1 aufweisen. Bei diesem Ausführungsbeispiel ist es in besonders wirkungsvoller Weise möglich, eine Wulstbildung des Endbereichs des Auftragselements 1 zu vermeiden, wobei sich die Stützwerkzeuge 3 nicht oder nur in geringem Kontakt mit der Oberfläche des Werkstücks 2 befinden.

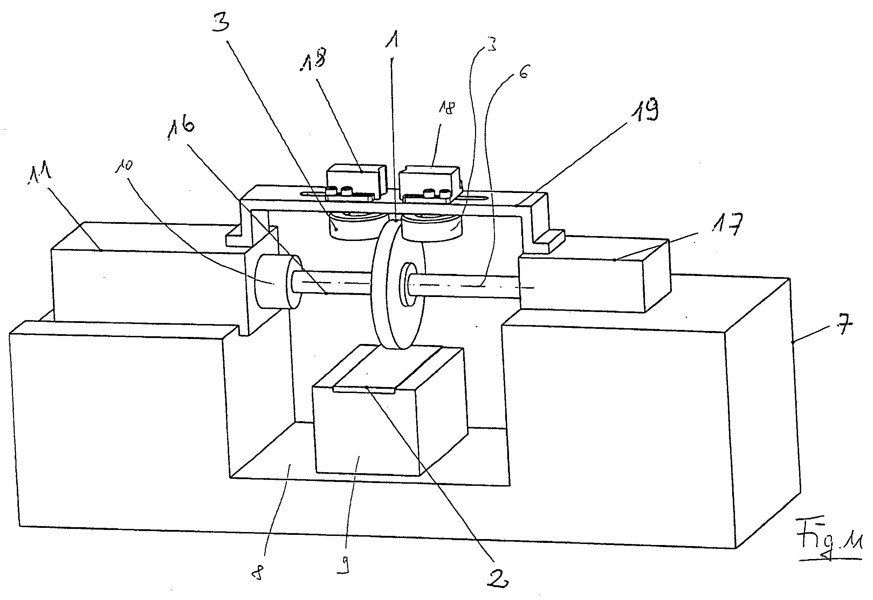

Die Fig. 11 zeigt ein weiteres Ausführungsbeispiel einer erfindungsgemäßen Reibauftragsvorrichtung, wobei auch hier gleiche Teile mit gleichen Bezugsziffern versehen sind, wie bei den vorherigen Ausführungsbeispielen.

Das Auftragselement 1 ist, wie in Fig. 2 gezeigt, scheibenförmig ausgebildet und rotiert um die Drehachse 6.

An einem Gestell 7 ist ein Tisch 8 ausgebildet, welcher einen Halter 9 trägt, auf welchem ein Werkstück 2 angeordnet ist. Dieses wird durch Kontakt mit dem sich drehenden Auftragselement 1 reibbeschichtet. Hierzu ist eine das Auftragselement 1 tragende Welle 16 an einer Drehspindel 10 gelagert, welche in einem Schlitten 11 gelagert ist. Der Schlitten 11 umfasst auch eine nicht dargestellte Antriebsvorrichtung, so wie dies auch bei den vorstehend beschriebenen Ausführungsbeispielen der Fall ist. Der Schlitten 11 ist zusammen mit einem die Welle 16 lagernden Gegenlager 17 relativ zu dem Werkstück 2 bewegbar, sei es durch Bewegung des Halters 9 oder durch Bewegung des Schlittens 11 und des Gegenlagers 17.

An einer Brücke 19, welche den Schlitten 11 und das Gegenlager 17 verbindet, sind rollenförmige Stützwerkzeuge 3 gelagert, beispielsweise mittels Lagerelementen 18. Die Stützwerkzeuge 3 rollen auf der jeweiligen Oberfläche des Auftragselements ab und verhindern eine Wulstbildung bzw. Formen einen Wulstbereich zurück.

### Bezugszeichenliste

- 1: Auftragselement
- 2: Werkstück
- 3: Stützwerkzeug
- 4: Trägervorrichtung
- 5: Wulst
- 6: Drehachse
- 7: Gestell
- 8: Tisch
- 9: Halter
- 10: Drehspindel
- 11: Schlitten
- 12: Support
- 13: Heizelement
- 14: Spalt
- 15: Stützkörper
- 16: Welle
- 17: Gegenlager
- 18: Lagerelement
- 19: Brücke

## Patentansprüche

1. Reibauftragsvorrichtung mit einem Auftragselement (1), welches mittels einer Bewegungsvorrichtung auf einer Oberfläche eines Werkstücks (2) und in Relativbewegung zur Oberfläche des Werkstücks (2) bewegbar ist, wobei am Kontaktbereich zwischen dem Auftragselement (1) und der Oberfläche des Werkstücks (2) zumindest ein in Kontakt mit dem Auftragselement (1) befindliches, eine Wulstbildung des Auftragselements (1) verhinderndes Stützwerkzeug (3) angeordnet ist, welches gegen den freien Endbereich des Auftragselements (1) anliegt.

2. Vorrichtung nach Anspruch 1, **dadurch gekennzeichnet, dass** das Stützwerkzeug (3) an der Oberfläche des Werkstücks (2) angeordnet ist.

3. Vorrichtung nach Anspruch 1, **dadurch gekennzeichnet, dass** das Stützwerkzeug (3) zusammen mit dem Auftragselement (1) entlang der Oberfläche des Werkstücks (2) bewegbar ist.

4. Vorrichtung nach einem der Ansprüche 1 bis 3, **dadurch gekennzeichnet, dass** das Stützwerkzeug (3) mittels zumindest einer Antriebsvorrichtung mit einer Relativbewegung zum Auftragselement (1) bewegbar ist.

5. Vorrichtung nach einem der Ansprüche 1 bis 4, **dadurch gekennzeichnet, dass** das Stützwerkzeug (3) an einer Trägervorrichtung (4) gelagert ist.

6. Vorrichtung nach einem der Ansprüche 1 bis 5, **dadurch gekennzeichnet, dass** das Stützwerkzeug (3) leistenförmig, rollenförmig, kegelrollenförmig oder bandartig ausgebildet ist.

7. Vorrichtung nach einem der Ansprüche 1 bis 6, **dadurch gekennzeichnet, dass** das Stützwerkzeug (3) lageveränderbar angeordnet ist.

8. Vorrichtung nach einem der Ansprüche 1 bis 7, **dadurch gekennzeichnet, dass** die Trägervorrichtung (4) zumindest ein Heizelement (13) zur Erwärmung des Auftragselements (1) umfasst und/oder dass das Stützwerkzeug (3) aus einem wärmeisolierenden oder schlecht wärmeleitenden Material gefertigt ist und/oder dass das Stützwerkzeug (3) mit einer Heizvorrichtung zur Erwärmung des Auftragselements (1) versehen ist.

9. Vorrichtung nach einem der Ansprüche 1 bis 8, **dadurch gekennzeichnet, dass** diese als Reibbeschichtungsvorrichtung oder als Reibschweißvorrichtung ausgebildet ist.

## Claims

1. A friction application device comprising an application element (1) which is movable by means of a moving device on a surface of a workpiece (2) and in a relative movement with respect to the surface of the workpiece (2), wherein at least one supporting tool (3) which is in contact with the application element (1) and prevents bead formation of the application element (1) and which abuts on the free end portion of the application element (1) is arranged on the contact region between the application element (1) and the surface of the workpiece (2).

2. The device according to claim 1, **characterized in that** the supporting tool (3) is arranged on the surface of the workpiece (2).

3. The device according to claim 1, **characterized in that** the supporting tool (3) together with the application element (1) is movable along the surface of the workpiece (2).

4. The device according to any one of claims 1 to 3, **characterized in that** the supporting tool (3) is movable by means of at least one drive device with a relative movement to the application element (1).

5. The device according to any one of claims 1 to 4, **characterized in that** the supporting tool (3) is supported on a carrier device (4).

6. The device according to any one of claims 1 to 5, **characterized in that** the supporting tool (1) is configured to be one of bar-shaped, roll-shaped, in the form or tapered rollers, and band-shaped.

7. The device according to any one of claims 1 to 6, **characterized in that** the supporting tool (3) is arranged to be variable in its position.

8. The device according to any one of claims 1 to 7, **characterized in that** the carrier device (4) comprises at least one heating element (13) for heating the application element (1), and/or that the supporting tool (3) is made from a heat-insulating material or a material of poor heat conductivity, and/or that the supporting tool (3) is provided with a heating device for heating the application element (1).

9. The device according to any one of claims 1 to 8, **characterized in that** said device is configured as a friction coating device or as a friction welding device.

## Revendications

1. Dispositif d'application par friction avec un élément d'application (1) qui peut être déplacé à l'aide d'un dispositif de déplacement sur une surface d'une pièce (2) et en mouvement relatif vers la surface de la pièce (2), au moins un outil d'appui (3) se trouvant en contact avec l'élément d'application (1), empêchant une formation de bourrelet de l'élément d'application (1) l'outil d'appui étant agencé sur la zone de contact entre l'élément d'application (1) et la surface de la pièce (2), lequel outil d'appui repose contre la zone d'extrémité libre de l'élément d'application (1).

2. Dispositif selon la revendication 1, **caractérisé en ce que** l'outil d'appui (3) est agencé sur la surface de la pièce (2).

3. Dispositif selon la revendication 1, **caractérisé en ce que** l'outil d'appui (3) est mobile conjointement avec l'élément d'application (1) le long de la surface de la pièce (2).

4. Dispositif selon l'une quelconque des revendications 1 à 3, **caractérisé en ce que** l'outil d'appui (3) est mobile à l'aide d'au moins un dispositif d'entraînement avec un mouvement relatif vers l'élément d'application (1).

5. Dispositif selon l'une quelconque des revendications 1 à 4, **caractérisé en ce que** l'outil d'appui (3) est logé sur un dispositif de support (4).

6. Dispositif selon l'une quelconque des revendications 1 à 5, **caractérisé en ce que** l'outil d'appui (3) est réalisé en forme de barre, de rouleau, de rouleau conique ou de bande.

7. Dispositif selon l'une quelconque des revendications 1 à 6, **caractérisé en ce que** l'outil d'appui (3) est agencé en position modifiable.

8. Dispositif selon l'une quelconque des revendications 1 à 7, **caractérisé en ce que** le dispositif de support (4) comporte au moins un élément chauffant (13) pour le chauffage de l'élément d'application (1) et/ou **en ce que** l'outil d'appui (3) est fabriqué en un matériau thermoisolant ou à mauvaise conduction thermique et/ou **en ce que** l'outil d'appui (3) est pourvu d'un dispositif de chauffage pour le chauffage de l'élément d'application (1).

9. Dispositif selon l'une quelconque des revendications 1 à 8, **caractérisé en ce que** celui-ci est réalisé comme un dispositif de revêtement par friction ou comme un dispositif de soudage par friction.
